# EUROPÄISCHE PATENTSCHRIFT

(11) **EP 1 322 021 B1**
(45) Veröffentlichungstag und Bekanntmachung des Hinweises auf die Patenterteilung: **31.08.2005**
(21) Anmeldenummer: 01130794.9
(22) Anmeldetag: 23.12.2001
(51) Int. Cl.: H02K 1/14, H02K 3/34

(54) **Stator für einen Elektromotor**
Stator for an electric motor
Stator pour moteur éléctrique

(43) Veröffentlichungstag der Anmeldung: 25.06.2003
(73) Patentinhaber: GRUNDFOS A/S, DK-8850 Bjerringbro (DK)
(72) Erfinder: Stampe, Lars Toft, 8800 Viborg (DK); Hellegaard, Kjeld, 8850 Bjerringbro (DK)
(74) Vertreter: Hemmer, Arnd

(56) Entgegenhaltungen:
- EP-A- 0 748 025
- EP-A- 1 096 642
- DE-A- 19 961 339
- DE-B- 1 090 746
- US-A- 4 689 023
- US-A- 6 081 056
- PATENT ABSTRACTS OF JAPAN vol. 1996, no. 09, 30. September 1996 (1996-09-30) & JP 08 140291 A (MATSUSHITA ELECTRIC IND CO LTD), 31. Mai 1996 (1996-05-31)
- PATENT ABSTRACTS OF JAPAN vol. 005, no. 066 (E-055), 2. Mai 1981 (1981-05-02) & JP 56 015146 A (HITACHI LTD), 13. Februar 1981 (1981-02-13)

## Beschreibung

Die Erfindung geht aus von einem Stator gemäß dem Oberbegriff des Patentanspruchs 1.

Ein derartiger Stator ist in der EP-A-1 096 642 beschrieben. Er umfasst einen Sternaufbau aus einer Mehrzahl von Polschenkeln, wobei die Polschenkel je mit einem Spulenträger mit einer darauf gewickelten elektrischen Spule versehen sind, und einen den Sternaufbau außen umfangsmäßig umgebenden, mit dem Sternaufbau fest verbundenen Polring. Der Polring ist an seinem Innenumfang mehrfach genutet ausgebildet, um zum einen eine Befestigung für die Polschenkel des Sternaufbaus zu bilden. Zwischen den Nuten für die Befestigung der Polschenkel befinden sich zwei weitere und voneinander beabstandete, sehr flache Vertiefungen, wobei sich in jeder Vertiefung ein ebener Außenrand der Radialflansche der Spulenträger abstützt, um zum anderen zu erreichen, dass die Spulenträger und damit die Spulen innerhalb des Polringes platzsparend angeordnet werden können.

In der DE-A-199 61 339 ist ein weiterer Stator beschrieben. Dieser Stator ist prinzipiell so aufgebaut wie der vorstehend beschriebene Stator, jedoch mit dem Unterschied, dass anstelle zweier sehr flacher Vertiefungen zwischen den Befestigungsnuten für die Polschenkel des Sternaufbaus nur eine einzige sehr flache Vertiefung vorgesehen ist. In jeder Vertiefung stützt sich jeweils ein Außenrand von zwei einander benachbarten Spulenträgern ab. Auch in diesem Fall soll eine platzsparende Anordnung der Spulenträger innerhalb des Polringes erreicht werden. Da jedoch die elektrischen Spulen einander sehr naheliegend angeordnet sind, ist jeder Spulenträger zusätzlich mit einer seitlichen und an seine elektrische Spule anklappbaren Isolierplatte versehen, um zwischen den elektrischen Spulen eine ausreichend elektrische Isolierung zu schaffen. Außerdem hat sich in der Praxis gezeigt, dass in dem Polring störende elektrische Kriechströme in denjenigen Bereichen auftreten, die den Zonen gegenüberliegen, in denen sich die Spulenträger einander berühren.

In der DE-B-1 090 746 (Auslegeschrift) ist noch ein weiterer Stator beschrieben. Der Aufbau dieses Stators ist ähnlich demjenigen nach der vorerwähnten EP-A-1 096 642 und weist den Unterschied auf, dass keine Befestigungsnuten für die Polschenkel des Sternaufbaus vorgesehen sind, sondern dass stattdessen die Enden der Polschenkel mit Presssitz am Innenumfang des Polringes anliegen. Ein weiterer Unterschied besteht darin, dass der Polring an seinem Innenumfang zwischen den Presssitzstellen für die Polschenkel des Sternaufbaus jeweils mit einer sehr flachen Montagenut zum Einsetzen der Polschenkel in den Polring versehen ist. Diese Montagenuten haben eine äußerst geringe Tiefe, die nur dem radialen Wärmeausdehnungsmaß des Polringes entspricht, wenn dieser erwärmt wird, damit die axial in den Montagenuten vormontierten Enden der Polschenkel nach alleiniger Erwärmung des Polringes aus den Montagenuten in Umfangsrichtung des Polringes herausgedreht und zu ihren Presssitzanlagestellen verdreht werden können, wo sie nach Abkühlung des Polringes mit Presssitz am Innenumfang des Polringes anliegen. Die elektrischen Spulen sind auf den Polschenkeln derart angeordnet, dass sie zwischen sich einen Luftspalt aufweisen, der den Montagenuten radial gegenüberliegt. Dieser Statoraufbau ist infolge der Montagenuten und der Wärmeanwendung während des Montierens des Sternaufbaus kompliziert und teuer herzustellen und sichert keine ausreichende Kriechstromvermeidung in dem Polring in denjenigen Polringbereichen, an welchen jeweils zwei einander benachbarte elektrische Spulen ihren geringsten Abstand voneinander aufweisen.

Die EP-A 1 096 642 offenbart einen Stator mit Polspalen. Das Statorjoch weist eine axiale Innennut auf, in der der isolierende Spulenträger eingreift.

In der japanischen Patentoffenlegungsschrift JP-A 81 40 291 ist ein aus mehren Polelementen zusammengesetzter Statorring für einen Elektromotor beschrieben, wobei jedes Polelement einen radial einwärts gerichteten Polschenkel aufweist, auf dem ein elektrisch isolierender Spulenträger mit einer elektrischen Spule sitzt. Jeder Spulenträger hat einen äußeren Radialflansch, wobei die einander zugekehrten äußeren Radialflansche der Spulenträger der jeweils einander benachbarten Polelemente im Wesentlichen aneinander angrenzen. Die Polelemente sind auf der Innenseite des Statorringes mit Aussparrungen versehen, die in dem Bereich, in dem die Radialflansche aneinandergrenzen, radial nach innen offene Nuten bilden, durch welche eine elektrische Isolationsstrecke zwischen den elektrischen Spulen der Spulenträger und den Polelementen bei aneinandergrenzenden Spulen gegeben ist.

Die Aufgabe der vorliegenden Erfindung besteht darin, einen Stator der einleitend angeführten Art so zu verbessern, dass er bei einfacher und kostengünstiger Herstellung keine störende Kriechstrombildung in dem Polring im Bereich des geringsten Abstandes der an dem Polring anliegenden Spulenträger voneinander aufweist, und darin, einen solchen Stator so auszustatten, dass er im weiteren Fertigungsablauf für die Herstellung eines elektrischen Motors beschädigungsfrei handhabbar und zum elektrisch steckfertigen Anschließen nach seinem Einsetzen in ein Motorgehäuse ausgebildet ist.

Die Lösung der Aufgabe ist in dem Patentanspruch 1 angegeben.

Die erfindungsgemäße Lösung ermöglicht es, einen Stator der einleitend angeführten Art für einen Elektromotor so auszubilden, dass eine störende Kriechstrombildung in seinem Polring im Bereich des geringsten Abstandes der an dem Polring anliegenden Spulenträgerzonen voneinander vermieden ist, wobei der Stator auf einfache und kostengünstige Weise hergestellt werden kann. Obwohl die elektrischen Spulen in ihren dem Polring zugekehrten Bereichen sehr nahe beieinander liegen, besteht mittels der Innennutten des Polrings dennoch eine ausreichende Schutzstrecke in denjenigen Bereichen des Polringes, die den einander benachbarten und an den Polring angrenzenden Zonen der elektrischen Spulen gegenüberliegen.

Weiterhin kann der erfindungsgemäße Stator innerhalb des Fertigungsablaufes für die Herstellung eines Elektromotors so gehandhabt werden, dass eine sichere automatische Fertigung des Elektromotors gewährleistet ist, wobei die axial aus dem Stator herausragenden Enden der elektrischen Spulen auf den Spulenträgern geschützt sind. Gleichzeitig wird dabei der Stator so vervollkommnet, dass er als fertig vormontierte Einheit in ein Motorgehäuse eingesetzt werden kann, wobei die in dem Klemmenkasten des Motorgehäuses vorgesehene elektrische Steuerungseinrichtung für den Stator durch einen einfachen, radialen Aufsteckvorgang mit dem erfindungsgemäßen Stator schnell und einfach elektrisch verbunden werden kann.

In einer bevorzugten Ausführungsform weist jeder Radialflansch der Spulenträger an seinen zwei sich radial gegenüberliegenden Außenenden je einen und in Richtung zu dem Polring abgewinkelten Randbereich auf, wobei jedem der beiden abgewinkelten Randbereiche jeweils eines Radialflansches ein abgewinkelter Randbereich des ihm jeweils benachbarten Radialflansches zugekehrt ist und mit diesem abgewinkelten Randbereich ein Randbereichpaar bildet, das in die zugehörige Innennut des Polringes eingreift. Vorteilhaft stoßen die abgewinkelten Randbereiche jedes Randbereichpaares aneinander. Hierdurch wird eine sehr wirksame Kriechstromvermeidung erreicht.

Alternativ ist es jedoch auch möglich, dass keine abgewinkelten Randbereiche des an dem Polring anliegenden Radialflansches der Spulenträger vorgesehen sind, so dass die Außenenden des Radialflansches der Spulenträger in einfacher Weise einander zugekehrt sind und vorzugsweise aneinanderstoßen. In diesem Fall sind die Innennuten des Polringes in diesem Bereich der Radialflansche entsprechend groß bemessen, um den elektrischen Anforderungen zur Vermeidung von Kriechströmen zu genügen. In diesem Fall weisen die Innennuten des Polringes eine Breite und eine Tiefe von wenigstens 2,4 mm auf.

Vorteilhaft sind die weiteren elektrischen Steckanschlüsse der Verbindungs- und Schutzscheibe in Form einer Steckleiste zusammengefasst und radial besteckbar ausgebildet, um die Steuerungseinrichtung durch radiales Aufstecken aufzunehmen.

Des Weiteren ist auf der anderen Seite des Polringes eine ringförmige Schutzplatte aus Isoliermaterial befestigt.

Die Erfindung ist nachstehend anhand eines in den anliegenden Zeichnungen dargestellten Ausführungsbeispieles näher erläutert. Es zeigen:
- Fig. 1: eine Endansicht auf das Ausführungsbeispiel,
- Fig. 2: eine teilweise Endansicht auf das Ausführungsbeispiel nach Fig. 1 in vergrößertem Maßstab,
- Fig. 3: eine teilweise Perspektivansicht auf das Ausführungsbeispiel mit weggelassenen Innenteilen,
- Fig. 4: eine teilweise Endansicht auf ein abgeändertes Ausführungsbeispiel,
- Fig. 5: eine Einzelheit des Ausführungsbeispiels nach Fig. 1 in Perspektivansicht,
- Fig. 6: eine teilweise Endansicht eines weiteren abgeänderten Ausführungsbeispieles,
- Fig. 7: ein viertes Ausführungsbeispiel in Perspektivansicht,

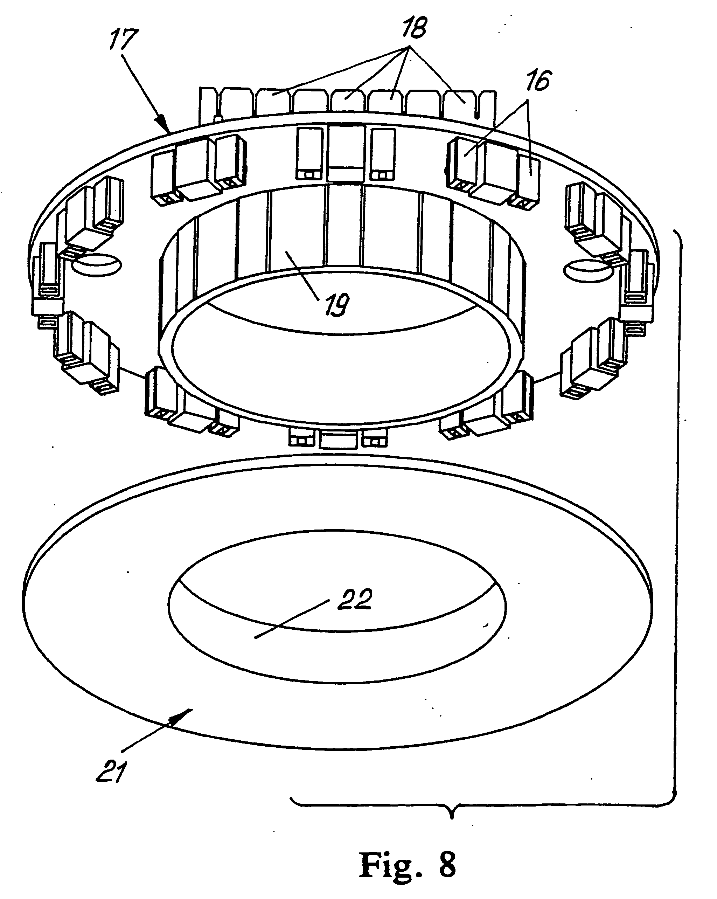

- Fig. 8: das Ausführungsbeispiel nach Fig. 7 in vereinfachter Perspektivansicht.

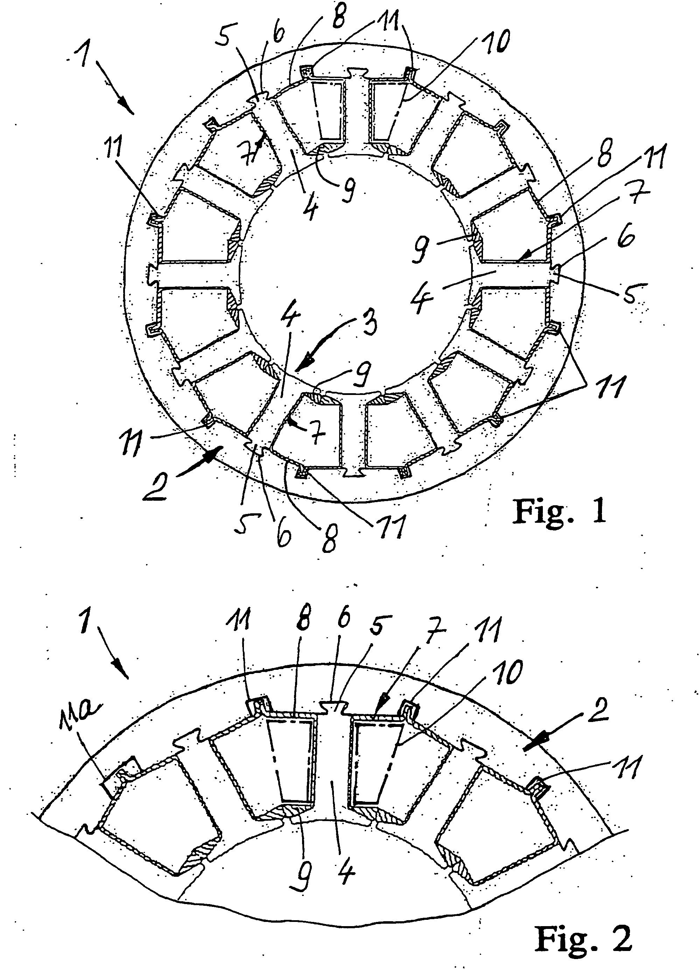

Gemäß den Figuren 1 bis 7 besteht der allgemein mit 1 bezeichnete Stator für einen Elektromotor, der beispielsweise für Heizungsumwälzpumpen verwendet wird, in seinen Hauptbestandteilen aus einem äußeren Polring 2 aus Metall und aus einem inneren Sternaufbau 3 aus einer Mehrzahl von metallischen Polschenkeln 4, die an dem Polring 2 starr befestigt sind. Der metallische Sternaufbau 3 kann in bekannter Weise aus einer Mehrzahl der einzelnen, in den Figuren 1, 2 sowie 4 und 6 gezeigten Polschenkel bestehen, die an ihrem dem Polring 2 zugekehrten Ende mit einer vorspringenden Federleiste 5 versehen sind, wobei jede Federleiste in eine entsprechende Schwalbenschwanznut 6 des Polringes fest eingreift. In alternativer Ausbildung des Sternaufbaus 3 kann auch so vorgegangen werden, dass er in an sich bekannter Weise aus einem Innenring besteht, von dem aus sich sternartig Polschenkel radial nach außen erstrecken und mit ihrem äußeren Ende in gewünschter Weise an dem Polring 2 befestigt sind, beispielsweise mittels einer einfachen Nut-Feder-Verbindung.

Auf jedem Polschenkel 4 befindet sich ein Spulenträger 7, der wenigstens an seinem dem Polring 2 zugekehrten Ende einen Radialflansch 8 aufweist. Vorteilhaft ist der Spulenträger 7 an seinem Innenende mit einem weiteren Radialflansch 9 versehen.

Auf jedem aus Isoliermaterial bestehenden Spulenträger 7 befindet sich in bekannter Weise eine elektrische Spule 10 aus einer Vielzahl von einzelnen Windungen. In den entsprechenden Figuren sind die elektrischen Spulen der besseren Übersicht wegen nur teilweise und strichpunktiert dargestellt.

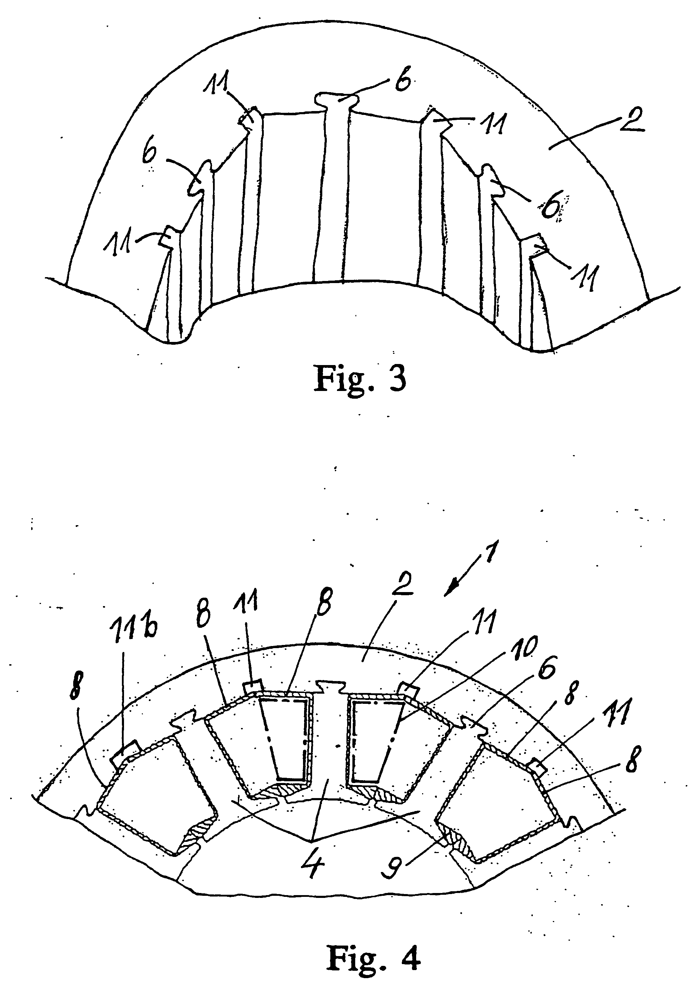

Der Polring 2 weist zwischen seinen Befestigungsstellen, z. B. die Feder-NutVerbindung 5, 6, für die Polschenkel 4 jeweils eine axiale Innennut 11 auf. Der axiale Verlauf der Innennuten 11 sowie auch der axiale Verlauf der Schwalbenschwanznuten 6 des Polringes 2 ist eindeutig aus Fig. 3 zu entnehmen. Alle Innennuten 11 befinden sich in demjenigen Bereich des Polringes 2 zwischen dessen Schwalbenschwanznuten 6, der den einander zugekehrten Enden der Radialflansche 8 der Spulenträger 7 zugekehrt ist, wie es die Figuren 1, 2, 4 und 6 zeigen. Die Innennuten 11 des Polringes 2 dienen zur Ausbildung einer elektrischen Schutzstrecke zum Vermeiden von störenden Kriechströmen in dem Polring 2 im Bereich der einander zugekehrten Enden des Radialflansches 8 der Spulenträger 7. Die Breite und die Tiefe der axialen Innennuten 1 bestimmt sich nach den jeweils in den Spulen 10 herrschenden elektrischen Strömen und kann daher für jeden Anwendungsfall unterschiedlich sein.

Die Figuren 1, 2 und 6 zeigen einen ersten Anwendungsfall, während in der Fig. 4 ein zweiter Anwendungsfall gezeigt ist.

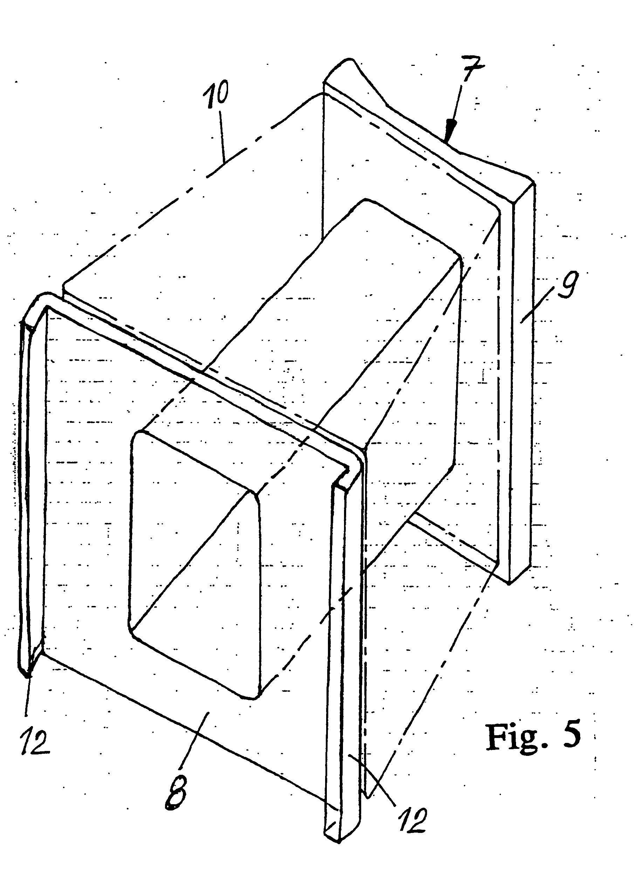

Zur Erläuterung des ersten Anwendungsfalles ist zunächst auf Fig. 5 Bezug genommen. Diese Figur zeigt einen Spulenträger 7, dessen dem Polring zugekehrter Radialflansch 8 an zwei sich radial gegenüberliegenden Außenenden je einen in Richtung zu dem Polring 2 abgewinkelten Randbereich 12 aufweist. Wie es aus den Figuren 1, 2 und 6 ersichtlich ist, bildet jeder abgewinkelte Randbereich 12 eines Radialflansches 8 mit einem abgewinkelten Randbereich des ihm jeweils benachbarten Radialflansches ein Randbereichpaar, und jedes so gebildete Randbereichpaar greift in eine zugehörige Innennut 11 des Polringes 2 ein. Durch dieses Eingreifen jeweils eines Randbereichpaares in eine Innennut 11 kann die Breite der jeweiligen Innennut relativ klein gewählt werden und wird im Wesentlichen der doppelten Dicke eines abgewinkelten Randbereiches 12 entsprechen.

Die Breite der Innennut wird im Allgemeinen einen Abmessungswert von 0,8 bis 3,0 mm haben und vorzugsweise einen Abmessungswert von wenigstens 2,4 mm aufweisen. Vorzugsweise wird auch die Tiefe der Innennuten 11 mit den vorgenannten Abmessungswerten gefertigt sein, da die abgewinkelten Randbereiche 12 der Radialflansche 8 ebenfalls solche Abmessungswerte aufweisen.

Bei der Ausbildung der Innennuten 11 kann so vorgegangen werden, dass die Nuttiefe entsprechend der Höhe der abgewinkelten Randbereiche 12 relativ klein sein kann, während die Nutbreite relativ groß sein kann. Eine solche Innennut ist mit 11a in Fig. 2 angedeutet.

Gemäß dem vorgenannten zweiten Anwendungsfall kann der Radialflansch 8 der Spulenträger 7 auch ohne abgewinkelte Randbereiche 12 verwendet werden. Ein solches Beispiel ist in Fig. 4 gezeigt. Bei diesem Beispiel liegen die einander zugekehrten Außenenden der einander benachbarten Radialflansche 8 den zugehörigen Innennuten 11 gegenüber, ohne dass irgendein Teil der Radialflansche in die zugehörige Innennut hineinragt. Auch in diesem Fall müssen die Tiefe und die Breite der Innennuten 11 so gewählt werden, dass eine störende Kriechstrombildung um den Bereich der Innennuten herum vermieden ist. Die Tiefe und die Breite werden im Allgemeinen einen Wert von 0,8 bis 3,0 mm und vorzugsweise einen Wert von wenigstens 2,4 mm aufweisen. Auch in diesem Fall kann so vorgegangen werden, dass, wenn die Tiefe einen relativ geringen Abmessungswert aufweist, die Breite der Innennuten dann einen entsprechend größeren Abmessungswert aufweist, z.B. den doppelten Wert der Tiefe. Eine solche Nut ist beispielsweise mit 11b in Fig. 4 angedeutet.

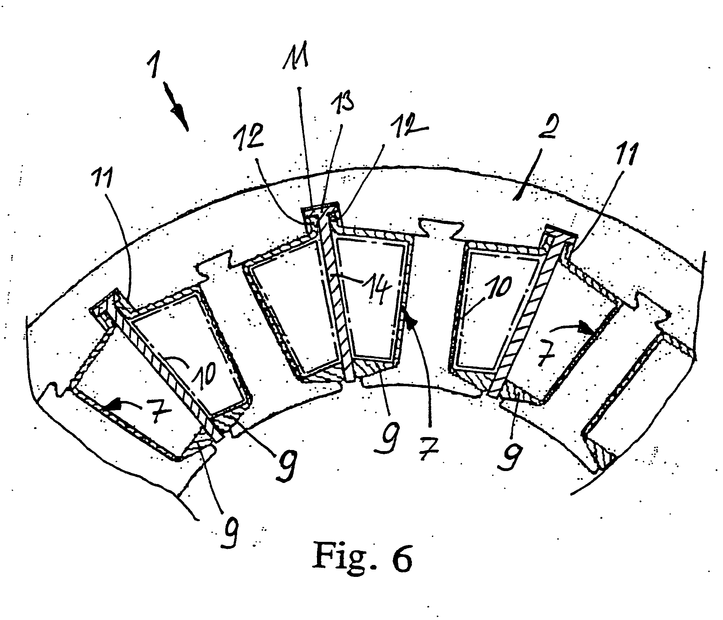

Der andere Radialflansch 9 der Spulenträger 7 ist vorteilhaft so ausgebildet, dass er in Richtung zu seinen beiden Außenenden hin stetig dicker wird. Die radiale Erstreckung des weiteren Radialflansches 9 kann dabei so gewählt werden, dass jeder Radialflansch 9 an dem Radialflansch 9 des jeweils benachbarten Spulenträgers 7 anstößt oder dass zwischen den jeweils einander zugekehrten Radialflanschen 9 ein Abstand verbleibt, wie es beispielsweise in Fig. 6 gezeigt ist. Auf jeden Fall wird auch in diesem Bereich der elektrischen Spulen 10 gewährleistet, dass sich hier keine störenden Kriechströme ausbilden.

Die in den Figuren 1 und 2 gezeigte Ausbildung der Spulenträger 7 ist derart, dass die jeweils einander zugekehrten und abgewinkelten Randbereiche 12 sich berühren bzw. aneinander anstoßen. Dies ist nicht unbedingt erforderlich, es kann auch ein Luftspalt dazwischen bestehen.

Hierbei kann in Weitergestaltung so vorgegangen sein, dass sich zwischen den abgewinkelten Randbereichen 12 von einander gegenüberliegenden Spulenträger 7 ein T-förmiger Endbereich 13 befindet, der ebenfalls in der jeweiligen axialen Innennut 11 des Polringes 2 befestigt ist und ein Befestigungsmittel für eine elektrisch isolierende Zwischenplatte 14 bildet, die zwischen den einzelnen elektrischen Spulen 10 angeordnet ist. Vorteilhaft erstreckt sich die Zwischenplatte bis zu den und zwischen den einander benachbarten weiteren Radialflanschen 9.

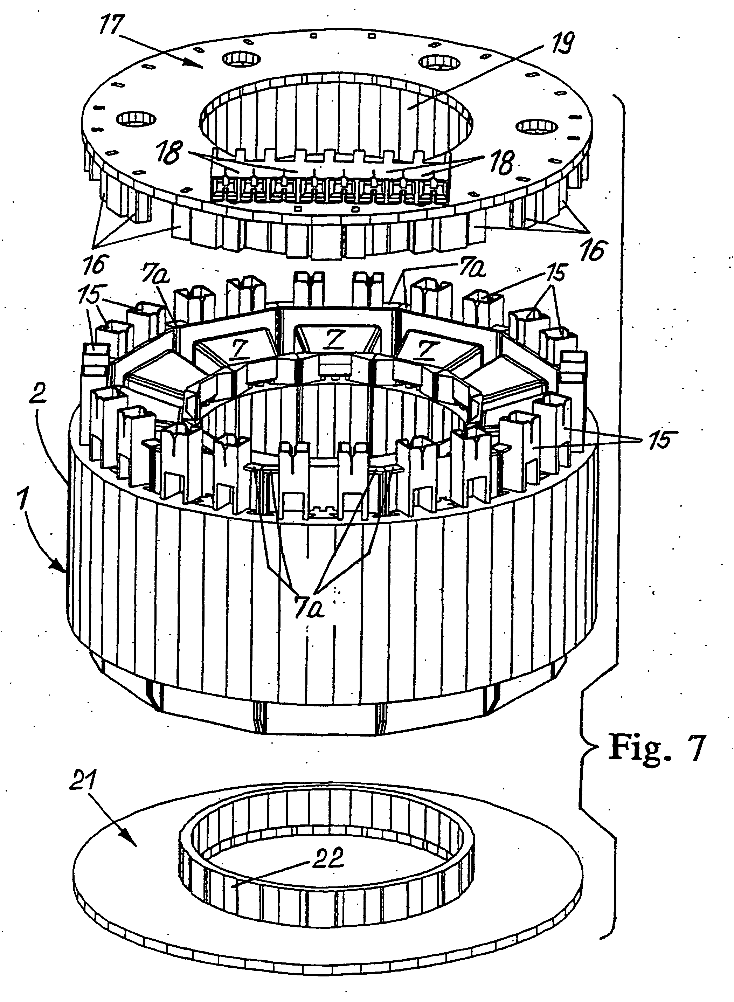

Gemäß Fig. 7 ist der nach den Figuren 1 bis 6 ausgebildete Polring 2 an seiner einen Endseite mit zwei axial vorstehenden, elektrischen Steckanschlüssen 15 für jede seiner elektrischen Spulen 10, die sich auf den Spulenträgern 7 befinden, ausgerüstet. Diese Steckanschlüsse 15 nehmen in bekannter Weise die Wicklungsenden der elektrischen Spulen 10 auf. Den Steckanschlüssen 15 sind elektrische Gegensteckanschlüsse 16, die an einer ringförmigen Verbindungs- und Schutzscheibe 17 aus Isoliermaterial, z.B. Kunststoff, vorgesehen sind, zugeordnet. Beim Aufstecken der Scheibe 17 auf den Polring 2 gelangen die Steckanschlüsse 15 und 16 ineinander, wodurch eine elektrische Verbindung der Wicklungsenden der Spulen 10 mit den elektrischen Kontakten der Gegensteckanschlüsse 16 erreicht wird.

Auf ihrer dem Polring 2 abgekehrten Seite ist die ringförmige Scheibe 17 mit weiteren Steckanschlüssen 18 versehen, die wie dargestellt beispielsweise in einer Steckleiste zusammengefasst sind. Die Steckanschlüsse 18 bzw. die entsprechende Steckleiste ist vorteilhaft so auf der Scheibe 17 angeordnet, dass die Steckanschlüsse 18 bzw. die Steckleiste radial besteckbar sind bzw. ist. Die Anschlüsse 18 bzw. die entsprechende Steckleiste können/kann jedoch auch axial ausgerichtet angeordnet sein. Die weiteren Steckanschlüsse 18 sind mit den Gegensteckanschlüssen 16 elektrisch verbunden, wobei die entsprechenden elektrischen Adern vorteilhaft innerhalb der Scheibe 17 verlaufen und darin bei der Spritzgießherstellung der Scheibe 17 verankert sind. Mit den weiteren Steckanschlüssen 18 wird eine elektrische Steuerungseinrichtung (nicht gezeigt) für den Stator 1 durch einen Steckvorgang verbunden. Die Steuerungseinrichtung enthält in bekannter Weise die elektrische Ausrüstung, mit welcher der Stator 1 betrieben wird.

Die ringförmige Verbindungs- und Schutzscheibe 17 ist an ihrem Innenumfang mit axialen Anschlagmitteln 19 zu ihrer axialen Positionierung auf dem Polring 2 versehen. Diese Anschlagmittel 19 bestehen beispielsweise aus einem zylindrischen, an der Scheibe 1 angegossenen Ring, der durch Reibschluss an dem Polring 2 angreift und somit die Scheibe 17 am Stator 1 befestigt. Alternativ ist es auch möglich, die Spulenträger 7 mit bekannten Befestigungsmitteln, z.B. Rastmittel 7a zu versehen, die mit entsprechenden Gegenteilen (nicht gezeigt) an der Scheibe 17 in Eingriff gelangen, um die Scheibe vorzugsweise formschlüssig an dem Stator 1 zu halten.

An der anderen Endseite des Polringes 2 ist eine ringförmige Schutzplatte 21 aus Isoliermaterial, beispielsweise Kunststoff, befestigt. Zu Befestigungszwecken weist diese Schutzplatte einen kurzen zylindrischen Fortsatz 22 auf, der mit seinem Außenumfang mit Reibschluss am Innenumfang des Sternaufbaus 3 bzw. an dessen Polschenkel 4 anliegt. Durch die Scheibe 17 und die Schutzplatte 21 ist der Stator 1 während des weiteren Fertigungsablaufes zur Herstellung eines elektrischen Motors geschützt handhabbar und gleichzeitig soweit vormontiert, dass er in ein Motorgehäuse (nicht gezeigt) eingesetzt und dort durch Steckverbinden mit der erwähnten Steuerungseinrichtung elektrisch verbunden werden kann.

## Patentansprüche

1. Stator für einen Elektromotor, wobei der Stator einen inneren metallischen Sternaufbau (3) aus einer Mehrzahl von Polschenkeln (4), die je mit einemelektrisch isolierenden Spulenträger (7) mit einer darauf gewickelten elektrischen Spule (10) versehen sind, und einen den Sternaufbau außen umfangsmäßig umgebenden und mit diesem fest verbundenen, metallischen, innen genuteten Polring (2) aufweist, wobei jeder Spulenträger an seinem dem Polring zugekehrten Ende mit einem Radialflansch (8) versehen ist, **dadurch gekennzeichnet, dass** der Polring (2) zwischen seinen Befestigungsstellen für die Polschenkel (4) des Sternaufbaus (3) im Bereich der einander zugekehrten Radialflansche (8) der Spulenträger (7) jeweils eine axiale Innennut (11) zur Ausbildung einer elektrischen Schutzstrecke zum Vermeiden von störenden Kriechströmen in dem Polring (2) im Bereich der einander zugekehrten Radialflansche (8) der Spulenträger (7) aufweist, dass der Polring (2) an seiner einen Endseite mit zwei axial vorstehenden, elektrischen Steckanschlüssen (15) für jede seiner elektrischen Spulen (10) und mit einer ringförmigen Verbindungs- und Schutzscheibe (17) aus Isoliermaterial versehen ist und dass die Verbindungs- und Schutzscheibe auf ihrer dem Polring (2) zugekehrten Seite elektrische Gegensteckanschlüsse (16), die mit den Steckanschlüssen (15) des Polringes (2) zusammenwirken, und auf ihrer anderen Seite weitere Steckanschlüsse (18), die einerseits mit den Gegensteckanschlüssen (16) elektrisch verbunden sind und andererseits mit einer elektrischen Steuerungseinrichtung für den Stator (1) zusammensteckbar sind, aufweist.

2. Stator nach Anspruch 1, **dadurch gekennzeichnet, dass** jeder Radialflansch (8) an zwei sich radial gegenüberliegenden Außenenden je einen in Richtung zu dem Polring (2) abgewinkelten Randbereich (12) aufweist, dass jedem der beiden abgewinkelten Randbereiche (12) jeweils eines Radialflansches (8) ein abgewinkelter Randbereich (12) des ihm jeweils benachbarten Radialflansches (8) zugekehrt ist und mit diesem abgewinkelten Randbereich ein Randbereichpaar bildet und dass das Randbereichpaar in die jeweilige Innennut (11) des Polringes 2 eingreift.

3. Stator nach Anspruch 2, **dadurch gekennzeichnet, dass** die abgewinkelten und jeweils das Randbereichpaar bildenden Randbereiche (12) des Radialflansches (8) der Spulenträger (7) aneinanderstoßen.

4. Stator nach Anspruch 2 oder 3, **dadurch gekennzeichnet, dass** die Tiefe und die Breite der Innennuten (11) des Polringes (2) sowie die Höhe der abgewinkelten Randbereiche (12) des Radialflansches (8) der Spulenträger (7) einen Abmessungswert von 0,8 bis 3,0 mm, vorzugsweise wenigstens 2,4 mm, aufweisen.

5. Stator nach einem der Ansprüche 1 bis 4, **dadurch gekennzeichnet, dass** jeder Spulenträger (7) einen weiteren Radialflansch (9), der an dem anderen, dem Polring (2) abgekehrten Ende des Spulenträgers vorgesehen ist, aufweist und dass jeder weitere Radialflansch (9) in Richtung zu seinen beiden Außenrändern hin stetig dicker werdend ausgebildet ist.

6. Stator nach Anspruch 5, **dadurch gekennzeichnet, dass** die beiden Außenenden des weiteren Radialflansches (9) jedes Spulenträgers (7) an dem ihnen zugekehrten Außenende des jeweils benachbarten weiteren Radialflansches (9) anstoßen.

7. Stator nach einem der Ansprüche 1 bis 6, **dadurch gekennzeichnet, dass** zwischen den elektrischen Spulen (10) der einander benachbarten Spulenträger (7) eine elektrisch isolierende Zwischenplatte (14) vorgesehen ist, die in die zugehörige Innennut (11) des Polringes (2) eingreift.

8. Stator nach Anspruch 7, **dadurch gekennzeichnet, dass** der in die Innennut (11) eingreifende Endbereich (13), der Zwischenplatte (14) T-förmig ausgebildet ist.

9. Stator nach Anspruch 1, **dadurch gekennzeichnet, dass** die weiteren elektrischen Steckanschlüsse (18) in Form einer Steckleiste zusammengefasst und vorzugsweise radial besteckbar ausgebildet sind, um mit der Steuerungseinrichtung durch Aufstecken elektrisch verbindbar zu sein.

10. Stator nach Anspruch 1 oder 9, **dadurch gekennzeichnet, dass** die ringförmige Verbindungs- und Schutzscheibe (17) an ihrem Innenumfang axiale Anschlagmittel (19) zu ihrer axialen Positionierung auf dem Polring (2) aufweist.

11. Stator nach Anspruch 1, 9, oder 10, **dadurch gekennzeichnet, dass** die ringförmige Verbindungs- und Schutzscheibe (17) durch Reibschluss an dem Innenumfang des Polringes (2) befestigt ist.

12. Stator nach einem der Ansprüche 1 bis 11, **dadurch gekennzeichnet, dass** eine ringförmige Schutzplatte (21) aus Isoliermaterial auf der anderen Endseite des Polringes (2) befestigt ist.

## Claims

1. A stator for an electric motor, wherein the stator comprises an inner metallic star construction (3) of a plurality of pole limbs (4) which each are provided with an electrically insulating coil support (7) with an electrical coil (10) wound thereon, and a metallic pole ring (2) which is grooved on the inside and which peripherally surrounds the star construction on the outside and is firmly connected to this, wherein each coil support at its end which faces the pole ring (2) is provided with a radial flange (8), **characterised in that** the pole ring (2) between its fastening locations for the pole limbs (4) of the star construction (3) in the region of the radial flanges (8) facing one another, of the coil supports (7) in each case comprises an axial inner groove (11) for forming an electrical protective path for avoiding disturbing creep currents in the pole ring (2) in the region of the radial flanges (8) facing one another, of the coil supports (7), that the pole ring (2) at its one end side is provided with two axially projecting, electrical plug connections (15) for each of its electrical coils (10) and with an annular connection- and protective disk (17) of insulating material, and that the connection- and protective disk on its side facing the pole ring (2) comprises electrical counter-plug connections (16) which cooperate with the plug connections (15) of the pole ring (2), and on its other side comprises further plug connections (18) which on the one hand are electrically connected to the counter-plug connections (16) and on the other hand may be stuck together with an electrical control means for the stator (1).

2. A stator according to claim 1, **characterised in that** each radial flange (8) at two radially oppositely lying outer ends in each case have an edge region (12) angularly bent in the direction of the pole ring (2), that an angularly bent edge region (12) of the radial flange (8) which is in each case adjacent to it faces each of the two angularly bent edge regions (12) in each case of a radial flange (8) and with this angularly bent edge region forms an edge region pair and that the edge region pair engages into the respective inner groove (11) of the pole ring (2).

3. A stator according to claim 2, **characterised in that** the angularly bent edge regions (12) of the radial flange (8) of the coil supports (7), said regions in each case forming the edge region pair, abut one another.

4. A stator according to claim 2 or 3, **characterised in that** the depth and the width of the inner grooves (11) of the pole ring (2) as well as the height of the angularly bent edge regions (12) of the radial flange (8) of the coil supports (7) have a dimensional size of 0.8 to 3.0 mm, preferably at least 2.4 mm.

5. A stator according to one of the claims 1 to 4, **characterised in that** each coil support (7) comprises a further radial flange (9) which is provided at the other end of the coil support (9) which is distant to the pole ring (2), and that each further radial flange (9) is designed becoming continuously thicker in the direction of its two outer edges.

6. A stator according to claim 5, **characterised in that** the two outer ends of the further radial flange (9) of each coil support (7) abut on the outer end facing them, of the respective adjacent further radial flange (9).

7. A stator according to one of the claims 1 to 6, **characterised in that** an electrically insulating intermediate plate (14) is provided between the electrical coils (10) of the coil supports which are adjacent to one another, and this plate engages into the associated inner groove (11) of the pole ring (2).

8. A stator according to claim 7, **characterised in that** the end region (13) of the intermediate plate, which engages into the inner groove (11) is designed T-shaped.

9. A stator according to claim 1, **characterised in that** the further electrical plug connections (18) are grouped together in the form of a connector strip and are designed preferably radially connectable, in order to be electrically connectable to the control means by way of pushing-on.

10. A stator according to claim 1 or 9, **characterised in that** the annular connection and protective disk (17) on its inner periphery comprises axial abutment means (19) for its axial positioning on the pole ring (2).

11. A stator according to claim 1, 9 or 10, **characterised in that** the annular connection- and protective disk (17) is fastened on the inner periphery of the pole ring (2) by way of a friction fit.

12. A stator according to one of the claims 1 to 11, **characterised in that** an annular protective plate (21) of insulating material is fastened on the other end side of the pole ring (2).

## Revendications

1. Stator destiné à un moteur électrique, le stator présentant une structure en étoile (3) métallique intérieure comprenant une pluralité de branches polaires (4), qui sont pourvues chacune d'un support de bobine (7) électriquement isolant avec une bobine électrique (10) enroulée dessus, et un anneau polaire (2) métallique, rainuré à l'intérieur, entourant la structure en étoile à l'extérieur sur le pourtour et relié de façon fixe à celle-ci, chaque support de bobine étant doté sur son extrémité tournée vers l'anneau polaire d'une bride radiale (8), **caractérisé en ce que** l'anneau polaire (2) présente respectivement entre ses points de fixation pour les branches polaires (4) de la structure en étoile (3) dans la zone des brides radiales (8), tournées l'une vers l'autre, des supports de bobine (7) une rainure intérieure (11) axiale pour la réalisation d'une section de protection électrique pour éviter des courants de fuite gênants dans l'anneau polaire (2) dans la zone des brides radiales (8), tournées l'une vers l'autre, des supports de bobine (7), **en ce que** l'anneau polaire (2) est doté, sur l'une de ses faces d'extrémité, de deux raccords emboîtables (15) électriques, saillant axialement, pour chacune de ses bobines électriques (10) et d'un disque de liaison et de protection (17) de forme annulaire, en matériau isolant, et **en ce que** le disque de liaison et de protection présente, sur sa face tournée vers l'anneau polaire (2), des contre-raccords emboîtables (16) électriques, qui coopèrent avec les raccords emboîtables (15) de l'anneau polaire (2), et sur son autre face, d'autres raccords emboîtables (18), qui, d'une part, sont reliés électriquement aux contre-raccords emboîtables (16) et, d'autre part, peuvent être emboîtés avec un dispositif de commande électrique pour le stator (1).

2. Stator selon la revendication 1, **caractérisé en ce que** chaque bride radiale (8) présente à chacune de deux extrémités extérieures opposées l'une à l'autre radialement, une zone de bord (12) coudée en direction de l'anneau polaire (2), **en ce qu'**une zone de bord (12) coudée de la bride radiale (8) qui lui est respectivement voisine est tournée vers chacune des deux zones de bord (12) coudées de respectivement une bride radiale (8) et forment avec cette zone de bord coudée une paire de zones de bord et **en ce que** la paire de zones de bord s'engage dans la rainure intérieure (11) respective de l'anneau polaire (2).

3. Stator selon la revendication 2, **caractérisé en ce que** les zones de bord (12), coudées et formant respectivement la paire de zones de bord, de la bride radiale (8) des supports de bobine (7) se touchent.

4. Stator selon la revendication 2 ou 3, **caractérisé en ce que** la profondeur et la largeur des rainures intérieures (11) de l'anneau polaire (2) ainsi que la hauteur des zones de bord (12) coudées de la bride radiale (8) des supports de bobine (7) présentent une valeur dimensionnelle de 0,8 à 3,0 mm, de préférence d'au moins 2,4 mm.

5. Stator selon l'une des revendications 1 à 4, **caractérisé en ce que** chaque support de bobine (7) présente une bride radiale supplémentaire (9), qui est prévue sur l'autre extrémité, tournée à l'opposée de l'anneau polaire (2), du support de bobine et **en ce que** chaque bride radiale supplémentaire (9) est dotée d'une configuration qui s'épaissit de façon continue en direction de ses deux bords extérieurs.

6. Stator selon la revendication 5, **caractérisé en ce que** les deux extrémités extérieures de la bride radiale supplémentaire (9) de chaque support de bobine (7) sont contiguës à l'extrémité extérieure, tournée vers elles, de la bride radiale supplémentaire (9) respectivement voisine.

7. Stator selon l'une des revendications 1 à 6, **caractérisé en ce qu'**entre les bobines électriques (10) des supports de bobine (7) respectivement voisins, est prévue une plaque intermédiaire (14) électriquement isolante, qui s'engage dans la rainure intérieure (11) correspondante de l'anneau polaire (2).

8. Stator selon la revendication 7, **caractérisé en ce que** la zone d'extrémité (13), s'engageant dans la rainure intérieure (11), de la plaque intermédiaire (14) est conçue en forme de T.

9. Stator selon la revendication 1, **caractérisé en ce que** les autres raccords emboîtables (18) électriques sont regroupés sous la forme d'une barrette d'emboîtement et sont conçus, de préférence, de façon emboîtable radialement, afin de pouvoir être reliés électriquement au dispositif de commande par emboîtement.

10. Stator selon la revendication 1 ou 9, **caractérisé en ce que** le disque de liaison et de protection (17) de forme annulaire présente, sur son pourtour intérieur, des moyens de butée axiaux (19) pour son positionnement axial sur l'anneau polaire (2).

11. Stator selon la revendication 1, 9 ou 10, **caractérisé en ce que** le disque de liaison et de protection (17) de forme annulaire est fixé par liaison à friction sur le pourtour intérieur de l'anneau polaire (2).

12. Stator selon l'une des revendications 1 à 11, **caractérisé en ce qu'**une plaque de protection (21) de forme annulaire, en un matériau isolant, est fixée sur l'autre face d'extrémité de l'anneau polaire (2).
